# EUROPÄISCHE PATENTSCHRIFT

(11) **EP 2 777 864 B1**
(45) Veröffentlichungstag und Bekanntmachung des Hinweises auf die Patenterteilung: **20.04.2016**
(21) Anmeldenummer: 14157289.1
(22) Anmeldetag: 28.02.2014
(51) Int. Cl.: B23K 26/24, B23K 26/32, F24C 7/00

(54) **Verfahren zum Verbinden von zwei Blechplatten eines Haushaltsgeräts mit überlappenden Laserschweissen von unterschiedlichen Edelstählen ; entsprechendes Haushaltsgerät**
Method of connecting two panels of sheet metal of a household appliance using overlapping laser welding of different stainless steels ; corresponding household appliance
Procédé de connexion de deux tôles d'un appareil ménager utilisant le soudage lasr par recouvrement de différents aciers inoxydables ; appareil ménager correspondant

(30) Priorität: 14.03.2013 ES 201330368
(43) Veröffentlichungstag der Anmeldung: 17.09.2014
(73) Patentinhaber: BSH Hausgeräte GmbH, 81739 München (DE)
(72) Erfinder: Ester Sola, Francisco Javier, 50001 Zaragoza (ES); Gonzalez Celis, Jesus Raul, 39300 Torrelavega (ES); Ocaña Moreno, Jose Luis, 28029 Madrid (ES); Tur Gil, Alejandro Juan, 28029 Madrid (ES); Urrutia Angos, David, 50009 Zaragoza (ES)

(56) Entgegenhaltungen:
- JP-A- H11 104 865
- US-A1- 2011 115 355
- IORDACHESCU M ET AL: "RESIDUAL STRESS DISTRIBUTIONS IN FERRITIC TO AUSTENITIC STEEL JOINTS MADE BY LASER WELDING", ANNALS OF THE UNIVERSITY DUNAREA DE JOS OF GALATI: FASCICLE XII,, Bd. 24, 1. Januar 2013 (2013-01-01), Seiten 45-49, XP009179135,

## Beschreibung

Die Erfindung betrifft ein gemäß dem Oberbegriff des Anspruchs 1 ausgebildetes Verfahren zum Verbinden von zwei Blechplatten eines Haushaltsgeräts, insbesondere eines Gasherds. Die Erfindung betrifft außerdem ein Haushaltsgerät, insbesondere einen Gasherd, mit einer ersten und einer zweiten Blechplatte.

Verfahren zum Verbinden von zwei Blechplatten sind bereits aus dem Stand der Technik in vielfältiger Ausgestaltung bekannt. Zwei Blechplatten können bekanntlich beispielsweise durch Schweißen miteinander verbunden werden. Ein Verfahren gemäß dem Oberbegriff des Anspruchs 1 und ein Hanshaltsgerät gemäß dem Oberbegriff des Anspruchs 10 sind aus der Druckschrift US 2011/0115355 A1 bekannt. Werden jedoch Blechplatten aus Edelstahl verwendet, so erfordert das Schweißen noch mehr Kenntnisse, weil die Eigenschaften des Edelstahls erhalten bleiben sollen.

Noch schwieriger gestaltet sich die Verbindung von zwei Blechteilen, welche aus unterschiedlichen Edelstählen bzw. aus Edelstählen unterschiedlicher Materialzusammensetzung gebildet sind. Aus der Druckschrift JP H 11 104865 A ist bekannt, zwei aus Edelstählen unterschiedlicher Materialzusammensetzung gebildete Teile mittels einem Laser-Schweißverfahren mit Überlappung miteinander zu verbinden.

Insbesondere in heutigen Gasherden werden zunehmend Blechteile eingesetzt und miteinander verbunden, von denen eines aus ferritischem Edelstahl und das andere aus austenitischem Edelstahl gebildet sind. Die Verbindung von solchen Blechplatten stellt eine besondere Herausforderung dar (vgl. IORDACHESCU M ET AL: "RESIDUAL STRESS DISTRIBUTIONS IN FERRITIC TO AUSTENITIC STEEL JOINTS MADE BY LASER WELDING", ANNALS OF THE UNIVERSITY DUNAREA DE JOS OF GALATI: FASCICLE XII, Bd. 24 1. Januar 2013, Seiten 45 - 49, http://connection.ebscohost.com/c/articles/94349155/residual-stress-distributions-ferriticaustenitic-steel-joints-made-by-laser-welding). So muss sichergestellt werden, dass die Verbindungsstelle entsprechende Festigkeit aufweist, so dass einerseits ein Abreißen der Verbindung und andererseits auch eine Korrosion der Blechplatten im Bereich der Verbindungsstelle verhindert werden können. Diese Verbindungsschwierigkeiten treten insbesondere dann auf, wenn zwei sehr dünne Blechplatten miteinander verbunden werden sollen, deren Dicke kleiner als 1 mm ist. Wird eine der Blechplatten zusätzlich als äußere Verkleidungsplatte verwendet, wie dies beispielsweise bei Glasherden der Fall ist, so ergeben sich zusätzliche Anforderungen an das optische Erscheinungsbild dieser Blechplatte, welches durch den Verbindungsprozess nicht beeinträchtigt werden darf.

Es ist Aufgabe der Erfindung, eine Lösung aufzuzeigen, wie bei einem Verfahren der eingangs genannten Gattung eine besonders wirkungsvolle Verbindung zwischen den Blechplatten des Haushaltsgeräts bereitgestellt werden kann.

Diese Aufgabe wird erfindungsgemäß durch ein Verfahren sowie durch ein Haushaltsgerät mit den Merkmalen gemäß den jeweiligen unabhängigen Patentansprüchen 1 und 10 gelöst. Vorteilhafte Ausführungen der Erfindung sind Gegenstand der abhängigen Patentansprüche, der Beschreibung und der Figuren.

Bei einem erfindungsgemäßen Verfahren werden zwei Blechplatten eines Haushaltsgeräts, insbesondere eines Gasherds, miteinander verbunden, nämlich eine Blechplatte aus Edelstahl einer ersten Art und eine Blechplatte aus Edelstahl einer von der ersten Art unterschiedlichen zweiten Art. Die Blechplatten werden durch Überlappschweißen mittels eines Laserschweißgeräts miteinander verbunden.

Demnach wird vorgeschlagen, zwei Blechplatten eines Haushaltsgeräts, welche aus Edelstählen unterschiedlicher Materialzusammensetzung gebildet sind, durch Überlappschweißen miteinander zu verbinden, und zwar mittels Laserschweißen. Die Erfindung beruht dabei auf mehreren Erkenntnissen. Sie baut zunächst auf der Erkenntnis auf, dass bei Haushaltsgeräten, insbesondere bei Gasherden, sehr dünne Blechplatten mit einer Dicke weniger als 1 mm eingesetzt werden, die miteinander mit Hilfe einer zuverlässigen Verbindung gekoppelt werden sollen. Eine weitere Erkenntnis besteht darin, dass sich solche dünnen Blechplatten aus unterschiedlichen Edelstählen nicht ohne Weiteres miteinander zuverlässig verbinden lassen und die Verbindungsstelle eine relativ geringe Festigkeit aufweist, was einerseits zu einem Abreißen der Verbindung und andererseits auch zu einer Korrosion führen kann. Die Erfindung baut schließlich auf der Erkenntnis auf, dass die Nachteile des Standes der Technik dadurch umgangen werden können, dass die dünnen Blechplatten in einem Überlappungsbereich bzw. durch Überlappschweißen mit Hilfe eines Laserschweißgeräts miteinander verschweißt werden können. Es hat sich herausgestellt, dass mittels eines derartigen Schweißverfahrens auch zwei dünne Blechplatten zuverlässig miteinander verbunden werden können, die aus unterschiedlichen Edelstahlmaterialien gebildet sind. Eine derartige Verbindung weist eine verhältnismäßig hohe Festigkeit auf, und das Risiko einer Korrosion bzw. eines Abreißens der Verbindung ist gegenüber dem Stand der Technik wesentlich reduziert. Diese Verbindungsart erweist sich insbesondere auch dann als vorteilhaft, wenn eine der Blechplatten eine äußere Verkleidungsplatte des Haushaltsgeräts bildet und somit zum optischen Erscheinungsbild des Haushaltsgeräts beiträgt. Durch das Überlappschweißen mittels des Laserschweißgeräts wird verhindert, dass diese Blechplatte im Bereich der Verbindungsstelle verformt wird oder sonst ihre optischen Eigenschaften verliert.

Das erfindungsgemäße Verfahren hat außerdem den Vorteil, dass der Schweißvorgang der beiden Blechplatten mittels des Laserschweißgeräts automatisiert durchgeführt werden kann. Insbesondere gegenüber einer Klebeverbindung, wie sie bisher im Stand der Technik zum Verbinden von Blechplatten aus unterschiedlichen Edelstählen verwendet wurde, ergibt sich somit eine wesentliche Beschleunigung des Fertigungsprozesses.

Es werden also zwei dünne Blechplatten miteinander verbunden, von denen eine aus Edelstahl der ersten Art und die andere aus Edelstahl der zweiten Art gebildet sind. Dies bedeutet, dass die beiden Blechplatten aus unterschiedlichen Edelstahlmaterialien bzw. aus Edelstählen unterschiedlicher Materialzusammensetzungen gebildet sind, d.h gemäß der Erfindung eine erste der Blechplatten aus austenitischem Edelstahl und eine zweite der Blechplatten aus ferritischem Edelstahl. Beispielsweise kann die erste Blechplatte aus dem Edelstahl AISI 304 gebildet sein, während die zweite Blechplatte aus dem Edelstahl AISI 430 oder AISI 441 gebildet sein kann. Insbesondere bei einer derartigen Kombination aus einer austenitischen Edelstahlplatte und einer ferritischen Edelstahlplatte erweist sich das vorgeschlagene Schweißverfahren als besonders vorteilhaft. Solche Edelstähle sind nämlich nur bedingt dazu geeignet, um miteinander verschweißt zu werden. Eine wirkungsvolle und zuverlässige Verbindung ergibt sich jedoch dann, wenn diese unterschiedlichen Materialien durch Überlappschweißen mittels eines Laserschweißgeräts miteinander verschweißt werden.

Unter dem Begriff "Überlappschweißen" wird vorliegend ein Schweißvorgang verstanden, bei welchem die beiden Blechplatten in gegenseitiger Überlappung und somit parallel zueinander und zumindest bereichsweise aneinander anliegend angeordnet werden und das Laserschweißgerät derart ausgerichtet wird, dass der erzeugte Laserstrahl insbesondere unter einem Winkel von 45° bis 90° zu den jeweiligen Oberflächen der Blechplatten verläuft und somit durch eine der Blechplatten durchdringt, um an dem Übergang zwischen den Blechplatten eine stoffschlüssige Verbindung herzustellen.

Bevorzugt liegt die Dicke zumindest einer der Blechplatten, insbesondere beider Blechplatten, in einem Wertebereich von 0,6 mm bis 1 mm. Die Dicke der Blechplatten kann beispielsweise 0,6 mm oder 0,7 mm oder 0,8 mm oder 0,9 mm oder 1 mm betragen. Die beiden Blechplatten können auch die gleiche Dicke aufweisen oder sie können unterschiedlich dick ausgebildet sein. Gerade in Verbindung mit dem Überlappschweißen hat sich eine derartige Dicke in dem Wertebereich von 0,6 mm bis 1 mm als vorteilhaft erwiesen, weil der Laserstrahl durch eine solchermaßen dünne Blechplatte wirkungsvoll hindurchdringen kann und somit eine zuverlässige stoffschlüssige Verbindung an der Grenze zwischen den beiden Blechplatten hergestellt werden kann.

In einer Ausführungsform ist vorgesehen, dass eine der Blechplatten als äußere Verkleidungsplatte des Haushaltsgeräts ausgebildet wird. Insbesondere ist diese Blechplatte eine äußere Verkleidungsplatte eines Gasherds, durch welche sich die Gasbrenner des Gasherds hindurch erstrecken. die Oberfläche dieser Verkleidungsplatte stellt somit die äußere, obere Oberfläche des Gasherds dar. Der neueste Trend geht dahin, diese Verkleidungsplatte so eben und dünn wie möglich auszugestalten, um das Design bzw. die Ausgestaltung einer Ceranplatte zu imitieren.

Eine solche dünne Ausgestaltung der Verkleidungsplatte des Gasherds führt jedoch dazu, dass sich diese Edelstahlplatte im Betrieb des Gasherds aufgrund von Temperaturdifferenzen verformen kann. Aus diesem Grund erweist sich als vorteilhaft, wenn die andere Blechplatte als Teil eines Stützelements ausgebildet wird, welches zum Verstärken der Verkleidungsplatte dient. Ein derartiges Stützelement kann in Form eines Bügels bereitgestellt werden, welcher einerseits über einen Flansch als Blechplatte mit der Verkleidungsplatte durch Überlappschweißen mittels des Laserschweißgeräts verschweißt und andererseits beispielsweise an einem Träger des Haushaltsgeräts abgestützt und mit diesem z.B. verschraubt wird. Mittels eines solchen Stützelements kann die Verkleidungsplatte besonders zuverlässig verstärkt und somit vor einer Verformung wirkungsvoll geschützt werden.

Insbesondere kann dabei vorgesehen sein, dass das Stützelement im Bereich eines Zentrums der Verkleidungsplatte mit dieser verbunden wird. Dies bedeutet, dass die Blechplatte des Stützelements etwa im mittleren Bereich der Verkleidungsplatte angeordnet wird. Dieser mittlere bzw. zentrale Bereich befindet sich üblicherweise in einem ausreichenden Abstand zu den Gasbrennern und wird somit durch die Temperaturänderungen wenig beeinflusst. Gerade an dieser Stelle erweist sich eine Verstärkung der Verkleidungsplatte als besonders vorteilhaft.

Allgemein gesagt kann vorgesehen sein, dass das Stützelement in einem Mindestabstand zu den Heizzonen des Gasherds angeordnet ist, wobei der Mindestabstand beispielsweise in einem Wertebereich von 5 cm bis 10 cm liegen kann.

Ergänzend oder alternativ kann vorgesehen sein, dass ein genanntes Verstärkungselement in einem Randbereich der Verkleidungsplatte eingesetzt wird, um letztere auch in diesem Randbereich zu verstärken.

Im Hinblick auf eine feste und rostfreie Verbindung zwischen den beiden Blechplatten hat sich als vorteilhaft gemäß der Erfindung erwiesen, wenn beim Schweißen der Blechplatten ein Fokus des Laserschweißgeräts auf eine äußere Oberfläche einer der Blechplatten eingestellt wird, d.h. auf diejenige Oberfläche einer der Blechplatten, welche von der anderen Blechplatte abgewandt und insbesondere dem Laserschweißgerät zugewandt ist.

Beim Schweißen der Blechplatten wird vorzugsweise eine Leistung des Laserschweißgeräts von 1,4 kW bis 2,3 kW eingestellt. Liegt die maximale Leistung des Laserschweißgerätes bei etwa 3,5 kW, so ergibt sich somit eine Einstellung von 40 % bis 65 % der maximalen Leistung. Eine solche Einstellung der Leistung hat sich als besonders guter Kompromiss zwischen der Festigkeit der Schweißverbindung einerseits und der Beibehaltung des einheitlichen Erscheinungsbilds der äußeren Oberflächen der Blechplatten andererseits erwiesen.

Dabei kann das Laserschweißgerät beim Verbinden der Blechplatten mit einer Geschwindigkeit von 50 mm/s bis 150 mm/s bewegt werden.

Bevorzugt wird das Laserschweißgerät beim Verbinden der Blechplatten mit einer Pulsfrequenz von 40 Hz bis 100 Hz betrieben. Auch diese Einstellung erweist sich hinsichtlich der Festigkeit der Schweißverbindung sowie im Hinblick auf die Beibehaltung der optischen Eigenschaften der Blechplatten als vorteilhaft.

Die Blechplatten werden vorzugsweise durch Punktschweißen miteinander verbunden. Dies bedeutet, dass anstatt von länglichen Schweißnähten Schweißpunkte ausgebildet werden, die die beiden Blechplatten miteinander verbinden. Insbesondere ist dabei vorgesehen, dass mindestens zwei, insbesondere mindestens drei, bevorzugt mindestens vier solche Schweißpunkte ausgebildet werden, welche gemäß einem vorbestimmten zweidimensionalen Muster bzw. gemäß einer vorbestimmten zweidimensionalen Verteilung mittels des Laserschweißgeräts automatisiert erzeugt werden. Somit kann eine zuverlässige und rostfreie Verbindung geschaffen werden, ohne dass die optischen Eigenschaften und die Beschaffenheit der Oberfläche der Blechplatten, und insbesondere der äußeren Blechplatte, beeinflusst werden. Als besonders vorteilhaft hat sich in diesem Zusammenhang eine hexagonale Verteilung von Schweißpunkten erwiesen.

Die Erfindung betrifft außerdem ein Haushaltsgerät, insbesondere einen Gasherd, mit einer ersten Blechplatte, welche aus Edelstahl einer ersten Art gebildet ist, und mit einer zweiten Blechplatte, welche aus Edelstahl einer zweiten Art gebildet ist, wobei die Blechplatten durch Überlappschweißen und durch Laserschweißen miteinander verbunden sind.

Die mit Bezug auf das erfindungsgemäße Verfahren vorgestellten bevorzugten Ausführungsformen und deren Vorteile gelten entsprechend für das erfindungsgemäße Haushaltsgerät.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert. Es sei betont, dass das nachfolgende Ausführungsbeispiel eine bevorzugte Ausführungsform der Erfindung darstellt und die Erfindung somit nicht auf diese beispielhafte Ausführungsform beschränkt ist.

Es zeigen:
- Fig. 1: in schematischer und perspektivischer Darstellung eine Verkleidungsplatte eines Gasherds sowie ein Stützelement, welches eine Blechplatte aufweist, die mit der Verkleidungsplatte durch Überlappschweißen mittels eines Laserschweißgeräts verbunden wird;
- Fig. 2: in schematischer Darstellung eine Seitenansicht der Verkleidungsplatte mit dem Stützelement; und
- Fig. 3: in schematischer Darstellung eine Draufsicht auf eine zweidimensionale Verteilung von Schweißpunkten, welche zwischen der Verkleidungsplatte und der Blechplatte des Stützelements erzeugt wird.

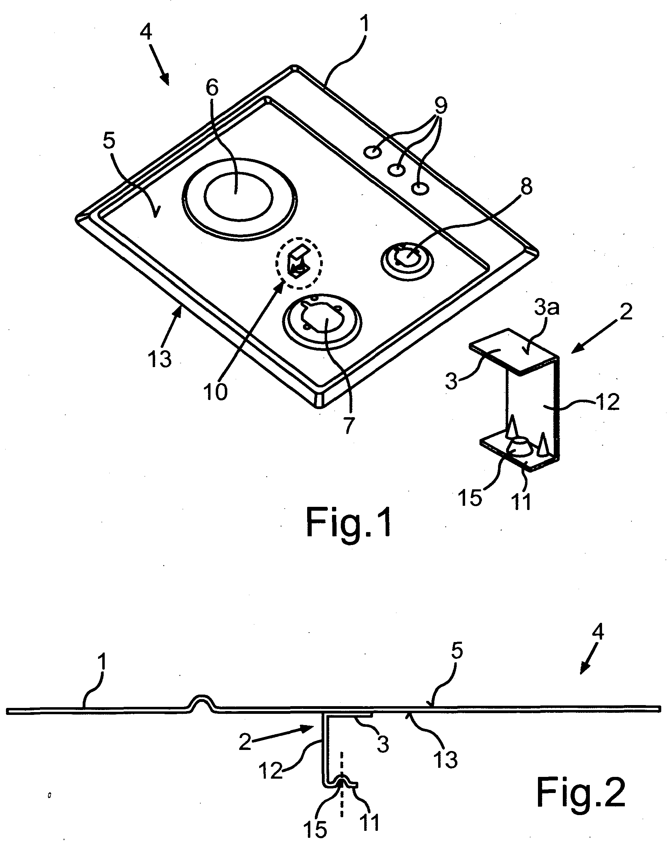

In Fig. 1 sind in schematischer und perspektivischer Darstellung eine Verkleidungsplatte 1 als erste Blechplatte sowie ein Stützelement 2 mit einer zweiten Blechplatte 3 dargestellt. Die Verkleidungsplatte 1 und die Blechplatte 3 stellen Blechplatten im Sinne der vorliegenden Erfindung dar. Die Verkleidungsplatte 1 ist gemäß der Erfindung aus austenitischem Edelstahl ausgebildet, während das Stützelement 2 und somit die Blechplatte 3 gemäß der Erfindung aus ferritischem Edelstahl ausgebildet ist. Z.B. kann die Verkleidungsplatte 1 aus dem Edelstahl AISI 304 gebildet sein; das Stützelement 2 kann aus dem Edelstahl AISI 430 oder AISI 441 gebildet sein.

Die Verkleidungsplatte 1 sowie das Stützelement 2 sind Bestandteile eines in Fig. 1 insgesamt mit 4 bezeichneten Gasherds, d.h. eines Küchengeräts, welches der Erhitzung von Speisen dient und mit Gas betrieben wird. Solche Gasherde 4 weisen bekanntlich Gasbrenner auf, durch welche Heizzonen des Gasherds 4 definiert werden.

Die Verkleidungsplatte 1 stellt die oberste Schicht des Gasherds 4 dar, so dass eine äußere Oberfläche 5 der Verkleidungsplatte 1 auch die äußere, obere Fläche des Gasherds 4 darstellt. In der Verkleidungsplatte 1 sind Durchgangsöffnungen 6, 7, 8 ausgebildet, durch welche sich die genannten Gasbrenner (nicht dargestellt) hindurch erstrecken. Außerdem sind in der Verkleidungsplatte 1 Durchgangsöffnungen 9 für Bedienelemente des Gasherds 4 ausgebildet.

Die Verkleidungsplatte 1 wird mit einer sehr geringen Dicke ausgebildet, welche in einem Wertebereich von 0,6 mm bis 1 mm liegen kann. Solche dünnen Verkleidungsplatten 1 sollen die Ausgestaltung von Ceranplatten imitieren, wie sie bei herkömmlichen Elektroherden oder Induktionsherden eingesetzt werden. Eine solchermaßen dünne Ausgestaltung der Verkleidungsplatte 1 kann jedoch auch zu Problemen mit der Planarität bzw. der Ebenheit der Verkleidungsplatte 1 führen, weil diese sehr hohen Temperaturdifferenzen im Betrieb des Gasherds ausgesetzt wird. Um eine Verformung der Verkleidungsplatte 1 zu verhindern, wird das Stützelement 2 eingesetzt, mittels welchem die Verkleidungsplatte 1 verstärkt wird, beispielsweise im Bereich eines Zentrums 10 und somit im mittleren Bereich.

Das Stützelement 2 ist in Form eines Bügels ausgebildet und weist neben der Blechplatte 3 auch eine parallel dazu angeordnete Platte 11 sowie eine die Blechplatte 3 mit der Platte 11 verbindende Verbindungsplatte 12 auf, die sich senkrecht zu der Blechplatte 3 erstreckt. Das Stützelement 2 ist somit in Form eines doppelten Winkelprofils ausgebildet.

In der Platte 11 ist eine Durchgangsöffnung 15 ausgebildet, über welche das Stützelement 2 mit einem Träger des Gasherds 4 mittels einer Schraubverbindung verbunden werden kann. An diesem Träger wird das Stützelement 2 abgestützt. Andererseits wird das Stützelement 2 über die Blechplatte 3 an die Verkleidungsplatte 1 angebunden, und zwar an ihre Unterseite 13. Mit anderen Worten wird eine Oberfläche 3a der Blechplatte 3 mit der Unterseite 13 der Verkleidungsplatte 1 in Anlage gebracht und mit dieser verbunden.

Das Stützelement 2 wird dabei - wie bereits ausgeführt - im Zentrum 10 der Verkleidungsplatte 1 und unter dieser angeordnet. Ergänzend oder alternativ kann ein derartiges Stützelement 2 auch in einem Randbereich der Verkleidungsplatte 1 eingesetzt werden. In jedem Falle wird jedoch ein Mindestabstand zu den Gasbrennern bzw. zu den Durchgangsöffnungen 6, 7, 8 eingehalten, nämlich beispielsweise ein Mindestabstand von 5 cm oder 6 cm oder 7 cm oder 8 cm oder 9 cm oder 10 cm.

In Fig. 2 ist eine Seitenansicht der Verkleidungsplatte 1 und des Stützelements 2 genauer dargestellt. Wie bereits ausgeführt, wird die Blechplatte 3 des Stützelements 2 in Anlage mit der Unterseite 13 der Verkleidungsplatte 1 gebracht und mit dieser verbunden. Weil die Verkleidungsplatte 1 und die Blechplatte 3 sehr dünne Platten mit einer Dicke kleiner als 1 mm sind und außerdem unterschiedliche Edelstähle für die Verkleidungsplatte 1 einerseits und die Blechplatte 3 andererseits verwendet werden, besteht eine besondere Herausforderung darin, eine Verbindung zwischen den beiden Blechplatten 1, 3 zu schaffen, die einerseits im Hinblick auf einen schnellen Fertigungsprozess automatisiert durchgeführt werden kann und andererseits auch besonders fest ist, so dass ein Abreißen dieser Verbindung sowie ein Rosten der beiden Blechteile 1, 3 möglichst verhindert werden kann. Eine weitere Anforderung betrifft die optischen Eigenschaften der Verkleidungsplatte 1: Die Verbindung zum Stützelement 2 soll das optische Erscheinungsbild der Verkleidungsplatte 1 nicht verändern, und insbesondere soll die äußere Oberfläche 5 der Verkleidungsplatte 1 frei von jeglichen Verbindungsspuren bleiben.

Um all diesen Anforderungen bei unterschiedlichen Edelstahlarten zu genügen, wird vorgeschlagen, die Verkleidungsplatte 1 mit der Blechplatte 3 des Stützelements 2 durch Überlappschweißen mittels eines Laserschweißgeräts zu verbinden. Dies bedeutet, dass die Blechplatte 3 in gegenseitiger Überlappung bzw. in Anlage mit der Unterseite 13 der Verkleidungsplatte 1 gebracht wird, wie dies in Fig. 2 dargestellt ist. Dann werden diese Blechplatten 1, 3 durch Überlappschweißen mittels des Laserschweißgeräts miteinander verschweißt. Der Laserstrahl kann dabei von unten auf die Blechplatte 3 unter einem Winkel von 45° bis 90° ausgerichtet werden und dringt somit durch die Blechplatte 3 hindurch und erreicht die Unterseite 13 der Verkleidungsplatte 1. Die Oberfläche 5 der Verkleidungsplatte 1 bleibt dabei frei von Schweißspuren. Alternativ kann der Laserstrahl optional auch auf die Verkleidungsplatte 1 gerichtet werden, wobei dann gegebenenfalls eine weitere Bearbeitung der Verkleidungsplatte 1 durch Polieren oder dergleichen durchgeführt werden kann.

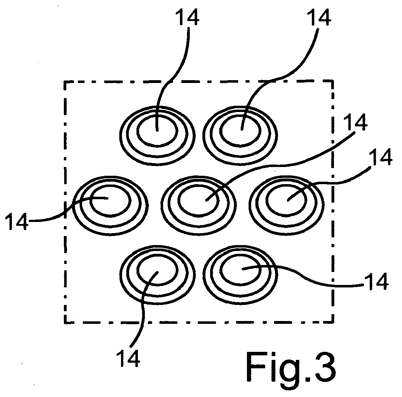

Beim Verschweißen der beiden Blechplatten 1, 3 werden bevorzugt Schweißpunkte 14 erzeugt, wie sie beispielhaft in Fig. 3 dargestellt sind. In Fig. 3 ist dabei eine hexagonale zweidimensionale Verteilung der Schweißpunkte 14 dargestellt, welche mittels des Laserschweißgeräts bereitgestellt werden. Es sind somit sechs Schweißpunkte 14 über den Umfang verteilt angeordnet, während sich in der Mitte des Hexagons ein zusätzlicher Schweißpunkt 14 befindet.

Beim Schweißen mittels des Laserschweißgeräts haben sich folgende Parameterwerte als besonders vorteilhaft erwiesen:
- Fokus = 0 mm, was bedeutet, dass der Brennpunkt des Lasers auf die erste Oberfläche eingestellt wird, auf welche der Laserstrahl einfällt;
- Geschwindigkeit der Bewegung: 50 bis 150 mm/sec.;
- Leistung: 40 % bis 65 %, wobei 100 % = 3,5 kW; und
- Pulsfrequenz: 40 bis 100 Hz.

### Bezugszeichenliste

- 1: Verkleidungsplatte
- 2: Stützelement
- 3: Blechplatte
- 3a: Oberfläche
- 4: Gasherd
- 5: Oberfläche
- 6: Durchgangsöffnung
- 7: Durchgangsöffnung
- 8: Durchgangsöffnung
- 9: Durchgangsöffnung
- 10: Zentrum
- 11: Platte
- 12: Verbindungsplatte
- 13: Unterseite
- 14: Schweißpunkt
- 15: Durchgangsöffnung

## Patentansprüche

1. Verfahren zum Verbinden von zwei Blechplatten (1, 3) eines Haushaltsgeräts (4), insbesondere eines Gasherds, wobei
- eine der Blechplatten (1, 3) aus Edelstahl einer ersten Art und die andere Blechplatte (1, 3) aus Edelstahl einer von der ersten Art unterschiedlichen zweiten Art bereitgestellt werden, **dadurch gekennzeichnet, dass**
- die Blechplatten (1, 3) durch Überlappschweißen mittels eines Laserschweißgeräts miteinander verbunden werden,
- eine erste der Blechplatten (1, 3) aus austenitischem Edelstahl bereitgestellt wird,
- eine zweite der Blechplatten (1, 3) aus ferritischem Edelstahl bereitgestellt wird und
- beim Verbinden der Blechplatten (1, 3) ein Brennpunkt des Laserschweißgeräts auf eine äußere Oberfläche einer der Blechplatten (1, 3) eingestellt wird.

2. .Verfahren nach Anspruch 1, **dadurch gekennzeichnet, dass** beide Blechplatten (1, 3) eine Dicke in einem Wertebereich von 0,6 mm bis 1 mm aufweisen.

3. Verfahren nach Anspruch 1 oder 2, **dadurch gekennzeichnet, dass** eine der Blechplatten (1, 3) als äußere Verkleidungsplatte (1) des Haushaltsgeräts (4) ausgebildet wird.

4. Verfahren nach Anspruch 3, **dadurch gekennzeichnet, dass** die andere Blechplatte (1, 3) als Teil eines Stützelements (2) zum Verstärken der Verkleidungsplatte (1) ausgebildet wird.

5. Verfahren nach Anspruch 4, **dadurch gekennzeichnet, dass** das Stützelement (2) im Bereich eines Zentrums (10) der Verkleidungsplatte (1) angeordnet wird.

6. Verfahren nach einem der vorhergehenden Ansprüche, **dadurch gekennzeichnet, dass** beim Verbinden der Blechplatten (1, 3) eine Leistung des Laserschweißgeräts von 1,4 kW bis 2,3 kW eingestellt wird.

7. Verfahren nach einem der vorhergehenden Ansprüche, **dadurch gekennzeichnet, dass** beim Verbinden der Blechplatten (1, 3) das Laserschweißgerät mit einer Pulsfrequenz von 40 Hz bis 100 Hz betrieben wird.

8. Verfahren nach einem der vorhergehenden Ansprüche, **dadurch gekennzeichnet, dass** beim Schweißen der Blechplatten (1, 3) mittels des Laserschweißgeräts mindestens zwei, insbesondere mindestens drei, bevorzugt mindestens vier, Schweißpunkte (14) ausgebildet werden.

9. Verfahren nach Anspruch 8, **dadurch gekennzeichnet, dass** eine hexagonale Verteilung von Schweißpunkten (14) ausgebildet wird.

10. Haushaltsgerät (4), insbesondere Gasherd, das nach dem Verfahren gemäß mindestens einem der Ansprüche 1 bis 9 hergestellt ist mit einer ersten Blechplatte (1, 3), welche aus Edelstahl einer ersten Art gebildet ist, und mit einer zweiten Blechplatte (1, 3), welche aus Edelstahl einer von der ersten Art unterschiedlichen zweiten Art gebildet ist, **dadurch gekennzeichnet, dass** die Blechplatten (1, 3) durch Überlappschweißen sowie durch Laserschweißen miteinander verbunden sind,und dass eine erste derBlechplatten (1, 3) aus anstenitischem Edelstahl bereitgestellt wird, und dass eine zweite der Blechplatten (1, 3) aus fanitigehemferritischem Edelstahl bereitgestellt wird.

## Claims

1. Method of connecting two panels of sheet metal (1, 3) of a household appliance (4), in particular a gas cooker, wherein
- one of the panels of sheet metal (1, 3) is provided from stainless steel of a first type and the other panel of sheet metal (1, 3) is provided from stainless steel of a second type which differs from the first type, **characterised in that**,
- the panels of sheet metal (1, 3) are connected to one another using overlapping laser welding by means of a laser welding device,
- a first of the panels of sheet metal (1, 3) is provided from austenitic stainless steel,
- a second of the panels of sheet metal (1, 3) is provided from ferritic stainless steel and
- when the panels of sheet metal (1, 3) are connected, a focal point of the laser welding device is adjusted to an outer surface of one of the panels of sheet metal (1, 3).

2. Method according to claim 1, **characterised in that** both panels of sheet metal (1, 3) have a thickness in a value range of 0.6 mm to 1 mm.

3. Method according to claim 1 or 2, **characterised in that** one of the panels of sheet metal (1, 3) is embodied as an outer cladding panel (1) of the household appliance (4).

4. Method according to claim 3, **characterised in that** the other panel of sheet metal (1, 3) is embodied as part of a support element (2) to strengthen the cladding panel (1).

5. Method according to claim 4, **characterised in that** the support element (2) is arranged in the region of a centre (10) of the cladding panel (1).

6. Method according to one of the preceding claims, **characterised in that** when the panels of sheet metal (1, 3) are connected, an output of the laser welding device of 1.4 kW to 2.3 kW is set.

7. Method according to one of the preceding claims, **characterised in that** when the panels of sheet metal (1, 3) are connected, the laser welding device is operated with a pulse frequency of 40 Hz to 100 Hz.

8. Method according to one of the preceding claims, **characterised in that** when the panels of sheet metal (1, 3) are welded using the laser welding device, at least two, in particular at least three, preferably at least four, welding points (14) are embodied.

9. Method according to claim 8, **characterised in that** a hexagonal distribution of welding points (14) is embodied.

10. Household appliance (4), in particular gas cooker, which is produced according to the method according to at least one of claims 1 to 9, having a first panel of sheet metal (1, 3), which is formed from stainless steel of a first type, and having a second panel of sheet metal (1, 3), which is formed from stainless steel of a second type that differs from the first type, **characterised in that** the panels of sheet metal (1, 3) are connected to one another using overlapping laser welding and using laser welding, and that a first of the panels of sheet metal (1, 3) is provided from austenitic stainless steel and that a second of the panels of sheet metal (1, 3) is provided from ferritic stainless steel.

## Revendications

1. Procédé permettant de relier deux plaques en tôle (1, 3) d'un appareil ménager (4), notamment d'une cuisinière à gaz (4),
- une des plaques en tôle (1, 3) étant fournie en acier inoxydable d'un premier type et l'autre plaque en tôle (1, 3) étant fournie en acier inoxydable d'un deuxième type différent du premier type, **caractérisé en ce que**
- les plaques en tôle (1, 3) sont reliées entre elles par soudage par recouvrement au moyen d'un appareil de soudage par laser,
- **en ce qu'**une première des plaques en tôle (1, 3) est fournie en acier inoxydable austénitique,
- **en ce qu'**une deuxième des plaques en tôle (1, 3) est fournie en acier inoxydable ferritique et
- **en ce que** lors de la liaison des plaques en tôle (1, 3), un point de combustion de l'appareil de soudage par laser est réglé sur une surface extérieure de l'une des plaques en tôle (1, 3).

2. Procédé selon la revendication 1, **caractérisé en ce que** les deux plaques en tôle (1, 3) présentent une épaisseur située dans une plage de valeurs allant de 0,6 mm à 1 mm.

3. Procédé selon la revendication 1 ou 2, **caractérisé en ce que** l'une des plaques en tôle (1, 3) est réalisée comme plaque de revêtement extérieure (1) de l'appareil ménager (4).

4. Procédé selon la revendication 3, **caractérisé en ce que** l'autre plaque en tôle (1, 3) est réalisée comme partie d'un élément de soutien (2) destiné à renforcer la plaque de revêtement (1).

5. Procédé selon la revendication 4, **caractérisé en ce que** l'élément de soutien (2) est disposé dans la zone d'un centre (10) de la plaque de revêtement (1).

6. Procédé selon l'une quelconque des revendications précédentes, **caractérisé en ce que** lors de la liaison des plaques en tôle (1, 3), une puissance de l'appareil de soudage par laser est réglée de 1,4 kW à 2,3 kW.

7. Procédé selon l'une quelconque des revendications précédentes, **caractérisé en ce que** lors de la liaison des plaques en tôle (1, 3), l'appareil de soudage par laser est mis en fonction avec une fréquence d'impulsion de 40 Hz à 100 Hz.

8. Procédé selon l'une quelconque des revendications précédentes, **caractérisé en ce que** lors du soudage des plaques en tôle (1, 3) au moyen de l'appareil de soudage par laser, au moins deux, notamment au moins trois, de préférence au moins quatre points de soudage (14) sont réalisés.

9. Procédé selon la revendication 8, **caractérisé en ce qu'**une répartition hexagonale de points de soudage (14) est réalisée.

10. Appareil ménager (4), notamment cuisinière électrique, qui est fabriqué suivant le procédé selon au moins une quelconque des revendications 1 à 9, comprenant une première plaque en tôle (1, 3) laquelle est formée en acier inoxydable d'un premier type, et comprenant une deuxième plaque en tôle (1, 3), laquelle est formée en acier inoxydable d'un deuxième type différent du premier type, **caractérisé en ce que** les plaques en tôle (1, 3) sont reliées entre elles par soudage par recouvrement ainsi que par soudage par laser et **en ce qu'**une première des plaques en tôle (1, 3) est fournie en acier inoxydable austénitique et **en ce qu'**une deuxième des plaques en tôle (1, 3) est fournie en acier inoxydable ferritique.
